# FASCICULE DE BREVET EUROPEEN

(11) **EP 1 454 795 B1**
(45) Date de publication et mention de la délivrance du brevet: **27.04.2005**
(21) Numéro de dépôt: 04290628.9
(22) Date de dépôt: 08.03.2004
(51) Int. Cl.: B60Q 1/42

(54) **Dispositif de déverrouillage d'un indicateur de changement de direction**
Rückstelleinrichtung für einen Fahrtrichtungsanzeiger
Canceling mechanism of a turn indicator

(30) Priorité: 07.03.2003 FR 0302966
(43) Date de publication de la demande: 08.09.2004
(73) Titulaire: Delphi Technologies Inc., Troy, MI 48007 (US)
(72) Inventeur: Kreider, Pierre, 68360 Soultz (FR); Ritondo, Cédric, 67200 Strasbourg (FR)
(74) Mandataire: Merckling, Norbert

(56) Documents cités:
- EP-A- 0 675 022
- EP-A- 1 060 949
- DE-A- 19 904 620
- DE-U- 8 504 080

## Description

La présente invention se rapporte au domaine technique des dispositifs indicateurs de changement de direction de véhicules motorisés. Ces dispositifs permettent d'avertir les autres usagers de la route de l'imminence d'une manoeuvre de changement de direction d'un véhicule.

Pour des raisons de confort d'utilisation, ces dispositifs sont pourvus d'un mécanisme de déverrouillage ramenant le levier d'actionnement des dispositifs dans leur position de repos, après leur actionnement, et ce automatiquement avec la rotation en sens inverse au sens d'actionnement du levier, de la colonne de direction.

Il peut arriver que l'utilisateur maintienne le levier dans l'une des positions d'actionnement, dans lesquelles l'un des clignotants gauche ou droit est actif, tout en tournant en sens inverse la colonne de direction. Il est alors indispensable de prévoir dans le dispositif des moyens de sécurité empêchant une détérioration ou une déformation, notamment du mécanisme de déverrouillage ou des pièces coopérant avec ce dernier.

On connaît un dispositif indicateur de changement de direction pour véhicules comportant :
- un boîtier fixe monté au voisinage d'une colonne de direction,
- un levier d'actionnement monté sur le boîtier et déplaçable entre trois positions stables, une position centrale, une position gauche et une position droite, la disposition dans la position gauche ou dans la position droite correspondant à l'actionnement d'au moins un contact électrique correspondant,
- un mécanisme de déverrouillage ramenant le levier dans sa position centrale à partir d'une position gauche ou droite, en cas de rotation en sens inverse de la colonne de direction, le mécanisme comportant un doigt rétractable, entraîné par le levier et relié à une pièce de guidage,
- la pièce de guidage étant montée pivotante autour d'un axe fixe dans le boîtier,
- le doigt rétractable étant mobile entre une position inactive correspondant à la position centrale du levier et une position active correspondant à la position gauche ou droite du levier,
- la position active correspondant à la disposition d'une extrémité du doigt rétractable sur le trajet d'un organe d'entraînement tournant avec la colonne de direction, une action de l'organe d'entraînement sur le doigt rétractable ramenant le levier dans sa position centrale.

On connaît ainsi le document DE - 31 46 271 décrivant un dispositif indicateur de direction, dans lequel la pièce de guidage se déplace par translation à l'encontre d'une force de rappel d'un ressort, en prenant appui sur une pièce en forme de came.

La nécessité de prévoir un déplacement par translation de la pièce de guidage augmente l'encombrement du dispositif, ce qui est un inconvénient, car très souvent il n'y a que peu d'espace disponible pour ces dispositifs.

On connaît également le document EP - 1 060 949, lequel décrit un dispositif indicateur de changement de direction pour véhicule, comportant un boîtier fixe, monté au voisinage d'une colonne de direction. Le dispositif comporte un mécanisme de déverrouillage, dont une pièce de guidage et un doigt rétractable montés dans un boîtier. Le doigt rétractable n'est cependant pas indépendant du boîtier.

Cette solution est techniquement complexe, car elle nécessite l'utilisation d'un grand nombre de pièces en interaction mécanique les unes avec les autres. Un ressort, monté entre le boîtier et le doigt rétractable, assure le rappel élastique dudit doigt rétractable et de la pièce de guidage. L'encombrement d'un tel ressort est un autre inconvénient de ce dispositif.

Ce dernier présente également l'inconvénient d'une liaison mécanique complexe entre le doigt rétractable et le levier d'actionnement. Le grand nombre de pièces utilisées, ainsi que leur assemblage complexe conduisent par ailleurs à des coûts de fabrication élevés.

Le but de la présente invention vise donc à réaliser un dispositif indicateur de direction, comportant un mécanisme de déverrouillage et des moyens de sécurité s'y rapportant avec un encombrement faible.

Un autre but de la présente invention vise à faciliter les opérations d'assemblage du dispositif indicateur de direction.

Selon l'invention, la pièce de guidage est montée pivotante autour d'un axe fixe dans le boîtier, à l'encontre de forces de rappel de ressorts, de manière à escamoter la pièce de guidage par pivotement sous l'action de l'organe d'entraînement et par conséquent à escamoter le doigt rétractable, en cas de maintien du levier dans sa position gauche ou droite lors de la rotation en sens inverse de la colonne de direction, le doigt rétractable étant monté pivotant et coulissant sur la pièce de guidage, laquelle constitue la seule liaison mécanique entre le boîtier et ledit doigt rétractable.

Le doigt rétractable est donc indépendant du boîtier. Le positionnement et le déplacement du doigt rétractable se fait uniquement par rapport à son support constitué par la pièce de guidage.

Les liaisons mécaniques entre les différentes pièces constitutives du dispositif conforme à l'invention, sont ainsi simplifiées, de même que leurs opérations de montage et d'assemblage.

La conception particulièrement simple du dispositif conforme à l'invention permet, lors d'un maintien forcé du levier en position droite ou gauche, de n'engendrer que le déplacement de la pièce de guidage autour de son axe de pivotement, et qu'une seule interaction avec le levier d'actionnement, à son extrémité.

Le doigt rétractable est ainsi indépendant du boîtier, et le sous-ensemble comprenant la pièce de guidage, le doigt rétractable, les ressorts d'escamotage et les ressorts de rappel, est assemblé au préalable de son montage dans le boîtier 1. Le montage complet du dispositif s'en trouve donc simplifié.

Les contraintes sur le levier d'actionnement sont ainsi réduites.

On peut noter également que le doigt rétractable est entièrement escamoté lorsque le levier d'actionnement est dans sa position neutre.

Le sous-ensemble précité met ainsi en oeuvre la fonction de « déverrouillage clignotant » et la fonction de « maintien forcé du clignotant », et ce dans un encombrement réduit.

Le levier d'actionnement dispose alors d'un maximum de place pour mettre en oeuvre ses fonctions propres, et les pièces nécessaires aux fonctions de «déverrouillage clignotant» et de « maintien forcé » ne sont pas réparties entre ledit levier d'actionnement et le boîtier. Ceci n'impose pas de formes spécifiques au levier d'actionnement, et influence favorablement son coût de fabrication.

Selon un exemple de réalisation, le doigt rétractable coulisse, sur la pièce de guidage radialement par rapport à la colonne de direction.

Selon un exemple de la réalisation, le levier comporte à son extrémité située au voisinage de la colonne de direction, un doigt d'indexage susceptible de se déplacer selon la direction longitudinale du levier, à l'encontre d'une force de rappel d'un ressort de compression, et venant en appui sur une surface d'indexage solidaire du boîtier fixe.

Selon un exemple de réalisation, le dispositif comporte des ressorts de positionnement reliant le doigt rétractable à la pièce de guidage.

Selon un exemple de réalisation, le doigt rétractable coulisse à l'encontre de forces de rappel de ressorts de positionnement, lesquels poussent un bord d'appui prévu sur le doigt rétractable, contre une butée se déplaçant avec le levier, ladite butée présentant une surface d'appui en relief, entraînant par coulissement le doigt rétractable entre sa position inactive et sa position active.

Le montage et le positionnement des ressorts de positionnement entre le doigt rétractable et la pièce de guidage se fait également de façon simple et indépendamment de tout autre élément du dispositif, notamment du boîtier.

La surface d'appui est par exemple réalisée avec une fenêtre ménagée dans une partie solidaire du levier.

Selon un exemple de réalisation, le boîtier présente une ouverture en arc de cercle dans laquelle s'étend un muret fixe, solidaire du boîtier, contre lequel les ressorts d'escamotage prennent appui avec l'une de leurs extrémités, leurs autres extrémités prenant appui sur la pièce de guidage.

Les ressorts d'escamotage sont par exemple montés précontraints dans la pièce de guidage et prennent appui sur le muret fixe après la mise en place de la pièce de guidage sur le boîtier.

Selon un exemple de réalisation, le plan de pivotement de la pièce de guidage est incliné par rapport à un plan de section transversale de la colonne de direction.

Selon un exemple de réalisation, la pièce de guidage présente une surface de coulissement s'étendant dans un plan orthogonal à l'axe de la colonne de direction, permettant ainsi au doigt rétractable de coulisser dans ce même plan.

D'autres caractéristiques et avantages ressortiront également de la description détaillée figurant ci-après, en référence aux dessins, donnés à titre d'exemples non limitatifs, dans lesquels :

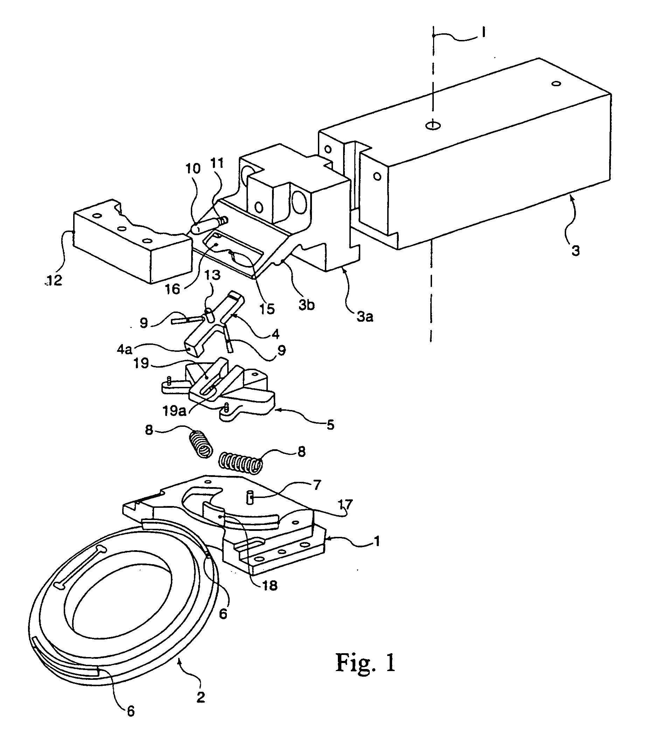

- la figure 1 est une vue éclatée d'un dispositif conforme à l'invention,
- la figure 2 est une vue partielle du dispositif conforme à l'invention dans une première position,
- la figure 3 est un détail de la figure 2,
- la figure 4 est une vue partielle du dispositif conforme à l'invention dans une seconde position,
- la figure 5 est un détail de la figure 4.

La présente invention concerne un dispositif indicateur de changement de direction notamment pour véhicule. Le dispositif conforme à l'invention comporte un boîtier fixe 1 monté au voisinage d'une colonne de direction 2.

Un levier d'actionnement 3 est monté sur le boîtier 1. Le levier d'actionnement 3 est déplaçable par pivotement autour d'un axe I entre trois positions stables, une position centrale, une position gauche et une position droite situées de part et d'autre de la position centrale. La disposition du levier 3 dans la position gauche ou dans la position droite correspond à l'actionnement d'au moins un contact électrique. C'est effectivement le positionnement du levier 3 dans l'une des positions gauche ou droite qui permet de déclencher un indicateur visuel et/ou sonore avertissant d'un changement de direction du véhicule. Le ou les contacts électriques activés permettent également de donner au conducteur un retour d'information sur l'enclenchement ou l'actionnement du levier 3.

Le dispositif conforme à l'invention comporte également un mécanisme de déverrouillage ramenant le levier 3 dans sa position centrale à partir d'une position gauche ou droite, en cas de rotation en sens inverse de la colonne de direction 2. Le mécanisme de déverrouillage comporte un doigt rétractable 4 entraîné par le levier 3 et monté sur une pièce de guidage 5.

Le dispositif conforme à l'invention comporte en outre des moyens de sécurité permettant à la pièce de guidage 5 de se déplacer dans le boîtier fixe 1. La pièce de guidage 5 permet donc au dispositif d'encaisser des contraintes ou des efforts sortant d'une utilisation normale ou habituelle du dispositif conforme à l'invention.

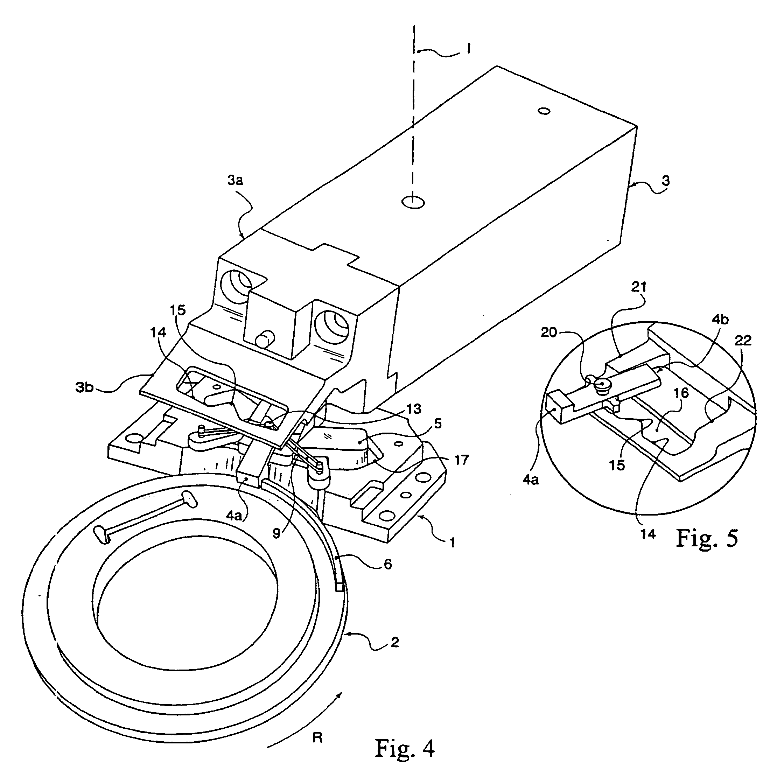

Le doigt rétractable 4 est mobile entre une position inactive correspondant à la position centrale du levier 3 et une position active correspondant à la position gauche ou droite du levier 3. Une position active est par exemple représentée aux figures 4 et 5.

La position active correspond à la disposition d'une extrémité 4a du doigt rétractable 4 sur le trajet d'un organe d'entraînement 6 tournant avec la colonne de direction 2. Une action sur le doigt rétractable 4 par l'organe d'entraînement 6 ramène ainsi le levier 3 dans sa position centrale. Le ou les contacts électriques commandés par le levier 3 sont ainsi désactivés.

A titre d'exemple la colonne de direction 2 comporte deux organes d'entraînement 6 répartis symétriquement autour de l'axe de ladite colonne de direction 2.

La pièce de guidage 5 est montée pivotante autour d'un axe fixe 7 dans le boîtier 1 à l'encontre de forces de rappel de ressort 8. Les ressorts 8 permettent d'escamoter la pièce de guidage 5 par pivotement sous l'action de l'organe d'entraînement 6 et par conséquent à escamoter le doigt rétractable 4 en cas de maintien du levier 3 dans sa position gauche ou droite, lors de la rotation en sens inverse de la colonne de direction 2.

Le pivotement de la pièce de guidage 5 se fait dans un sens ou dans l'autre à l'encontre de forces de rappel des ressorts 8. Il est ainsi possible de poursuivre la rotation en sens inverse de la colonne de direction 2 et par conséquent des organes d'entraînement 6, même lorsque le doigt rétractable 4 est maintenu dans une position se situant sur le trajet de l'organe d'entraînement 6. C'est plus précisément l'extrémité 4a du doigt rétractable 4 qui vient en butée contre l'organe d'entraînement 6, lequel en poursuivant sa rotation fait pivoter la pièce de guidage 5 et évite toute rupture ou déformation des pièces constitutives du dispositif conforme à l'invention.

Le doigt rétractable 4 coulisse sur la pièce de guidage 5 radialement par rapport à la colonne de direction 2. Ce coulissement du doigt rétractable 4 se fait à l'encontre de forces de rappel de ressorts de positionnement 9 reliant ledit doigt rétractable 4 de chaque côté à la pièce de guidage 5.

Lorsque le levier 3 est dans sa position centrale, le doigt rétractable 4 est maintenu dans une position libérant la trajectoire de l'organe d'entraînement 6. Cette position est obtenue grâce aux ressorts de positionnement 9 en extension. Un déplacement ou plus précisément un pivotement du levier 3 par rapport à son axe de pivotement I dans une position gauche ou droite entraîne de façon automatique le coulissement du doigt rétractable 4 dans sa position active dans laquelle son extrémité 4a se positionne sur le trajet de l'organe d'entraînement 6, et ce grâce aux ressorts de positionnement 9.

Le levier 3 comporte à son extrémité 3a située au voisinage de la colonne de direction un doigt d'indexage 10 susceptible de se déplacer selon la direction longitudinale du levier 3 à l'encontre d'une force de rappel d'un ressort de compression 11. L'extrémité du doigt d'indexage 10 vient en appui sur une surface d'indexage 12 solidaire du boîtier fixe 1. La coopération entre la surface d'indexage 12 et le doigt d'indexage 10 permet au levier 3 de se déplacer entre les positions stables centrales, gauche et droit. Un tel système d'indexage est connu en tant que tel.

Le doigt rétractable 4 coulisse à l'encontre de forces de rappel des ressorts de positionnement 9, lesquels poussent un bord d'appui 13 prévu sur le doigt rétractable 4 contre une butée 14 se déplaçant avec le levier 3. Le bord d'appui 13 est par exemple constitué d'un pivot saillant dépassant vers le haut du doigt rétractable 4.

La butée 14 présente une surface d'appui en relief, entraînant par coulissement le doigt rétractable 4 entre sa position inactive et sa position active. La butée 14 présente à cet effet un bossage central 15 contre lequel vient s'appuyer le bord d'appui 13 dans la position inactive du doigt rétractable 4.

La butée 14 est par exemple réalisée avec une fenêtre 16 ménagée dans une partie 3b solidaire du levier 3.

Le boîtier 1 présente avantageusement une ouverture 17 en arc de cercle dans laquelle s'étend un muret fixe 18 solidaire du boîtier 1 et contre lequel les ressorts 8 prennent appui avec l'une de leurs extrémités. Les autres extrémités des ressorts 8 prennent appui sur la pièce de guidage 5. Les ressorts 8 sont de préférence montés précontraints dans la pièce de guidage 5, et lors de la mise en place de la pièce de guidage 5 sur le boîtier 1, les ressorts avec l'un de leur plan d'appui, se positionnent contre le muret fixe 18. L'ouverture 17 permet d'accéder sous la pièce de guidage 5 et de faciliter le positionnement des ressorts 8.

Le plan de pivotement de la pièce de guidage 5 est par exemple incliné par rapport à un plan de section transversale et orthogonale à la colonne de direction 2. La pièce de guidage 5 présente par ailleurs une surface de coulissement 19 s'étendant dans un plan orthogonal à l'axe de la colonne de direction 2. Cette disposition permet au doigt rétractable 4 de coulisser dans un plan orthogonal à l'axe de la colonne de direction 2.

La figure 5 représente un détail de la figure 4, en vue de dessous, et montre plus précisément l'agencement et le positionnement du doigt rétractable 4 par rapport au levier 3. Le doigt rétractable 4 présente un doigt de coulissement 20 destiné à s'engager dans une fente 19a ménagée dans la surface de coulissement 19. Le doigt de coulissement 20 présente avantageusement une section longitudinale en forme de T évitant ainsi toute désolidarisation avec la pièce de guidage 5. La fente de coulissement 19a présente bien entendu une forme complémentaire à celle du doigt de coulissement 20.

Les figures 4 et 5 représentent le dispositif conforme à l'invention avec le doigt rétractable 4 dans une position active. Dans une telle position l'extrémité complémentaire 4b du doigt rétractable 4 est positionnée contre un bord 21 du levier 3. Le mécanisme de déverrouillage, par l'intermédiaire de l'organe d'entraînement 6, lors d'une rotation dans le sens R(cf. figure 4) de la colonne de direction 2, exerce une poussée contre l'extrémité 4a du doigt rétractable 4. Le doigt rétractable 4 a tendance à pivoter autour de son bord d'appui 13 et exerce une poussée sur le bord 21 du levier 3. Ce dernier est alors entraîné dans sa position centrale en entraînant simultanément par coulissement le doigt rétractable 4 dans sa position inactive, correspondant au positionnement du bord d'appui 13 sur le bossage 15. Le retour dans sa position centrale du levier 3 se fait conjointement avec le déplacement du doigt d'indexage 10 sollicité par le ressort de compression 11 contre la surface d'indexage 12. Les efforts à fournir par le doigt rétractable 4 lors d'un tel retour sont dus à ce phénomène.

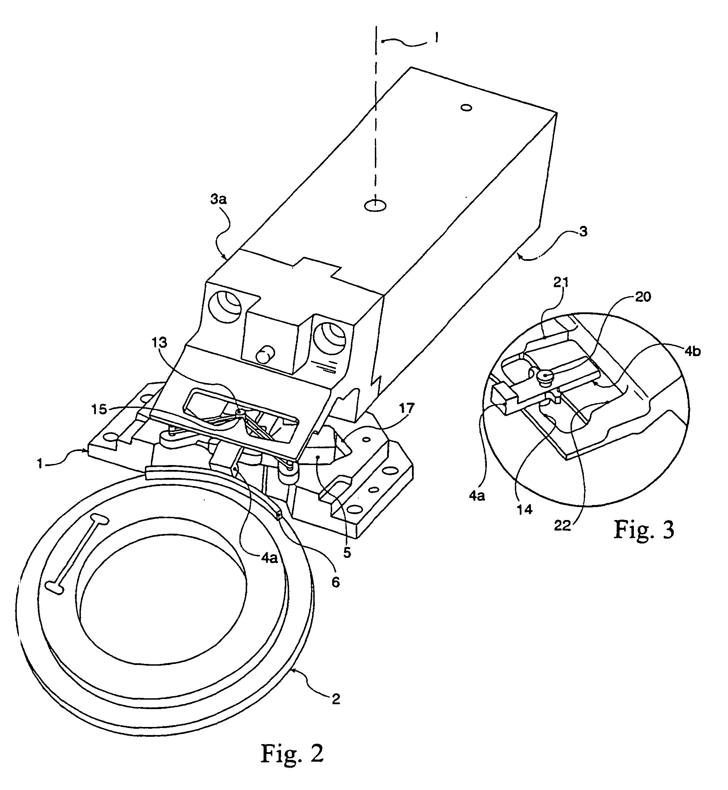

On se retrouve ensuite dans une disposition représentée aux figures 2 et 3. Lorsqu'en revanche, l'utilisateur maintient le levier 3 dans une position gauche ou droite par exemple représentée à la figure 4 et 5, l'organe d'entraînement 6 ne peut plus, lors de sa rotation dans le sens R, escamoter le doigt rétractable 4 et ramener le levier 3 dans sa position centrale. Le maintien du levier 3 dans une position gauche ou droite tel que représenté par exemple à la figure 4 et 5 entraîne par conséquent lors de la rotation en sens inverse de la colonne de direction 2, une transmission des efforts exercés par l'organe d'entraînement 6 sur la pièce de guidage 5 via le doigt rétractable 4, lequel est également bloqué par le bord 21 du levier 3. C'est alors la pièce de guidage 5 qui pivote autour de son axe de pivotement 7 à l'encontre des forces de rappel des ressorts 8. Le pivotement de la pièce de guidage 5 permet d'escamoter le doigt rétractable 4 du trajet de l'organe d'entraînement 6. La colonne de direction 2 peut ainsi poursuivre sa rotation malgré le maintien dans une position gauche ou droite du levier d'actionnement 3.

## Revendications

1. Dispositif indicateur de changement de direction pour véhicules comportant :
- un boîtier (1) fixe monté au voisinage d'une colonne de direction (2),
- un levier d'actionnement (3) monté sur le boîtier (1) et déplaçable entre trois positions stables, une position centrale, une position gauche et une position droite, la disposition dans la position gauche ou dans la position droite correspondant à l'actionnement d'au moins un contact électrique correspondant,
- un mécanisme de déverrouillage ramenant le levier dans sa position centrale à partir d'une position gauche ou droite, en cas de rotation en sens inverse de la colonne de direction (2), le mécanisme comportant un doigt rétractable (4), entraîné par le levier (3) et relié à une pièce de guidage (5),
- la pièce de guidage (5) étant montée pivotante autour d'un axe fixe (7) dans le boîtier (1), de manière à s'escamoter sous l'action de l'organe d'entraînement (6) et par conséquent à escamoter le doigt rétractable (4), en cas de maintien du levier (3) dans sa position gauche ou droite lors de la rotation en sens inverse de la colonne de direction (2),
- le doigt rétractable (4) étant monté pivotant et coulissant sur la pièce de guidage (5),
- le doigt rétractable (4) étant mobile entre une position inactive correspondant à la position centrale du levier (3) et une position active correspondant à la position gauche ou droite du levier (3),
- la position active correspondant à la disposition d'une extrémité (4a) du doigt rétractable (4) sur le trajet d'un organe d'entraînement (6) tournant avec la colonne de direction (2), une action de l'organe d'entraînement (6) sur le doigt rétractable (4) ramenant le levier (3) dans sa position centrale,
**caractérisé en ce que**
la pièce de guidage (5) pivote à l'encontre de forces de rappel de ressorts (8), et constitue la seule liaison mécanique entre le boîtier (1) et ledit doigt rétractable (4).

2. Dispositif selon la revendication 1, **caractérisé en ce qu'**il comporte des ressorts de positionnement (9) reliant le doigt rétractable (4) à la pièce de guidage.

3. Dispositif selon la revendication 2, **caractérisé en ce que** le doigt rétractable (4) coulisse à l'encontre de forces de rappel de ressorts de positionnement (9), lesquels poussent un bord d'appui (13) prévu sur le doigt rétractable (4), contre une butée (14) se déplaçant avec le levier (3), ladite butée présentant une surface d'appui en relief, entraînant par coulissement le doigt rétractable (4) entre sa position inactive et sa position active.

4. Dispositif selon la revendication 3, **caractérisé en ce que** la butée (14) est réalisée avec une fenêtre (16) ménagée dans une partie (3b) solidaire du levier (3).

5. Dispositif selon l'une quelconque des revendications 1 à 4, **caractérisé en ce que** le doigt rétractable (4) coulisse sur la pièce de guidage (5) radialement par rapport à la colonne de direction (2).

6. Dispositif selon l'une quelconque des revendications 1 à 5, **caractérisé en ce que** le levier (3) comporte à son extrémité (3a) située au voisinage de la colonne de direction (2), un doigt d'indexage (10) susceptible de se déplacer selon la direction longitudinale du levier (3), à l'encontre d'une force de rappel d'un ressort de compression (11), et venant en appui sur une surface d'indexage (12) solidaire du boîtier fixe (1).

7. Dispositif selon l'une quelconque des revendications 1 à 6, **caractérisé en ce que** le boîtier (1) présente une ouverture (17) en arc de cercle dans laquelle s'étend un muret fixe (18), solidaire du boîtier (1), contre lequel les ressorts (8) prennent appui avec l'une de leurs extrémités, leurs autres extrémités prenant appui sur la pièce de guidage (5).

8. Dispositif selon la revendication 7, **caractérisé en ce que** les ressorts (8) sont montés précontraints dans la pièce de guidage (5) et prennent appui sur le muret fixe (18) après la mise en place de la pièce de guidage (5) sur le boîtier (1).

9. Dispositif selon l'une quelconque des revendications 1 à 8, **caractérisé en ce que** le plan de pivotement de la pièce de guidage (5) est incliné par rapport à un plan de section transversale et orthogonale de la colonne de direction (2).

10. Dispositif selon la revendication 9, **caractérisé en ce que** la pièce de guidage (5) présente une surface de coulissement (19) s'étendant dans un plan orthogonal à l'axe de la colonne de direction (2), permettant ainsi au doigt rétractable (4) de coulisser dans ce même plan.

## Patentansprüche

1. Fahrtrichtungsanzeigevorrichtung für Fahrzeuge umfassend:
- ein Gehäuse (1) das fest in der Nähe einer Lenksäule (2) montiert ist,
- einen Betätigungshebel (3), der auf dem Gehäuse (1) montiert ist und zwischen drei stabilen Positionen verstellbar ist, einer zentralen Position, einer Linksstellung und einer Rechtsstellung, wobei die Anordnung in der Linksstellung oder der Rechtsstellung einer Betätigung wenigstens eines elektrischen Kontakts entspricht,
- einen Freigabemechanismus der den Hebel in seine zentrale Position ausgehend von der Linksstellung oder Rechtsstellung im Falle einer umgekehrten Rotation der Lenksäule (2) zurückführt, wobei dieser Freigabemechanismus einen zurückziehbaren Finger (4) enthält, der vom Hebel (3) mitgenommen wird und mit einem Führungsteil (5) verbunden ist,
- wobei das Führungsteil (5) schwenkbar um eine feste Achse (7) im Gehäuse (1) gelagert ist, derart, dass es unter der Wirkung des Mitnahmeorgans (6) eingezogen wird und dass demzufolge der zurückziehbare Finger (4) eingezogen wird im Falle des Haltens des Hebels (3) in seiner Rechtsoder Linksstellung bei der Rotation im umgekehrten Sinne der Lenksäule (2),
- wobei der zurückziehbare Finger (4) schwenkbar und gleitend auf dem Führungsteil (5) montiert ist,
- wobei der zurückziehbare Finger (4) beweglich zwischen einer inaktiven Stellung entsprechend einer Zentralstellung des Hebels (3) und einer aktiven Stellung entsprechend einer Links- oder Rechtsstellung des Hebels (3) beweglich ist,
- und wobei die aktive Position der Anordnung einer Extremität (4a) des zurückziehbaren Fingers (4) auf dem Weg eines Mitnahmeorgans (6) entspricht das sich mit der Lenksäule (2) dreht und eine Aktion des Mitnahmeorgans (6) auf den zurückziehbaren Finger (4) den Hebel (3) in seine Zentralposition zurückführt,
**dadurch gekennzeichnet,**
**dass** das Führungsteil (5) gegen die Rückstellkräfte von Federn (8) verschwenkt und die einzige mechanische Verbindung zwischen dem Gehäuse (1) und dem zurückziehbaren Finger (4) darstellt.

2. Vorrichtung nach Anspruch 1, **dadurch gekennzeichnet, dass** sie Positionierfedern (9) enthält die den zurückziehbaren Finger (4) mit dem Führungsteil verbinden.

3. Vorrichtung nach Anspruch 2, **dadurch gekennzeichnet, dass** der zurückziehbare Finger (4) gegen die Rückstellkräfte von Positionierfedern (9) gleitet, die ein Anschlagteil (13) am zurückziehbaren Finger (4) gegen ein Widerlager (14) drücken das sich mit dem Hebel (3) verschiebt, wobei das genannte Widerlager (14) eine Reliefanlagefläche aufweist, die durch Verschiebung den zurückziehbaren Finger (4) zwischen seiner aktiven Stellung und seiner inaktiven Stellung verschiebt.

4. Vorrichtung nach Anspruch 3, **dadurch gekennzeichnet, dass** das Widerlager (14) durch ein Fenster (16) in einem fest mit dem Hebel (3) verbundenen Teil (3b) realisiert ist.

5. Vorrichtung nach einem der Ansprüche 1 bis 4, **dadurch gekennzeichnet, dass** der zurückziehbare Finger (4) auf dem Führungsteil (5) radial gegen die Lenksäule (2) gleitet.

6. Vorrichtung nach einem der Ansprüche 1 bis 5, **dadurch gekennzeichnet, dass** der Hebel (3) an seinem Ende (3a) in der Nähe der Lenksäule (2) einen Verriegelungsfinger (10) enthält der in der Lage ist sich in Längsrichtung des Hebels (3) gegen eine Rückstellkraft einer Kompressionsfeder (11) zu verschieben und in Eingriff zu treten mit einer fest mit dem Gehäuse (1) verbundenen Verriegelungsfläche.

7. Vorrichtung nach einem der Ansprüche 1 bis 6, **dadurch gekennzeichnet, dass** das Gehäuse (1) eine Öffnung (17) in Form eines Kreisbogens aufweist, in welche sich eine niedrige Wand (18) erstreckt die mit dem Gehäuse (1) verbunden ist, gegen welche sich die Federn (8) mit ihren Enden abstützen, während ihre anderen Enden sich am Führungsteil (5) abstützen.

8. Vorrichtung nach Anspruch 7, **dadurch gekennzeichnet, dass** die Federn (8) vorgespannt im Führungsteil (5) montiert sind und sich an der niedrigen Wand (18) abstützen an dem das Führungsteil (5) auf dem Gehäuse (1) platziert worden ist.

9. Vorrichtung nach einem der Ansprüche 1 bis 8, **dadurch gekennzeichnet, dass** die Schwenkebene des Führungsteils (5) gegenüber einer transversalen und orthogonalen Schnittebene der Lenksäule (2) geneigt ist.

10. Vorrichtung nach Anspruch 9, **dadurch gekennzeichnet, dass** das Führungsteil (5) eine Kulissenfläche (19) aufweist die sich in einer Ebene orthogonal zur Achse der Lenksäule (2) erstreckt und es somit dem zurückziehbaren Finger (4) ermöglicht in der gleichen Ebene zu gleiten.

## Claims

1. Change-of-direction indicating device for vehicles, said device having:
- a fixed casing (1) which is mounted in the vicinity of a steering column (2);
- an activating lever (3) which is mounted on the casing (1) and is displaceable between three stable positions: a central position, a left-hand position and a right-hand position, disposition in the left-hand position or in the right-hand position corresponding to the activation of at least one corresponding electrical contact;
- an unlocking mechanism which brings the lever back into its central position from a left-hand or right-hand position in the event of rotation of the steering column (2) in the opposite direction, said mechanism having a retractable finger (4) which is entrained by the lever (3) and connected to a guiding piece (5);
- said guiding piece (5) being mounted so as to pivot about a fixed pin (7) in the casing (1) in such a way as to be retracted under the action of the entraining component (6) and consequently to retract the retractable finger (4) in the event of the lever (3) being held in its left-hand or right-hand position when the steering column (2) rotates in the opposite direction;
- the retractable finger (4) being mounted so as to pivot and slide on the guiding piece (5);
- the retractable finger (4) being movable between an inactive position corresponding to the central position of the lever (3) and an active position corresponding to the left-hand or right-hand position of said lever (3);
- the active position corresponding to the disposition of one end (4a) of the retractable finger (4) on the path of an entraining component (6) which revolves with the steering column (2), an action of said entraining component (6) on the retractable finger (4) bringing the lever (3) back into its central position,
**characterised in that**
the guiding piece (5) pivots counter to the returning forces of springs (8) and constitutes the only mechanical link between the casing (1) and the retractable finger (4).

2. Device according to claim 1, **characterised in that** it has positioning springs (9) which connect the retractable finger (4) to the guiding piece.

3. Device according to claim 2, **characterised in that** the retractable finger (4) slides counter to the returning forces of positioning springs (9) which push a bearing edge (13) provided on the retractable finger (4) against a stop (14) which moves with the lever (3), the said stop having a raised bearing surface which entrains the retractable finger (4) between its inactive position and its active position by sliding it.

4. Device according to claim 3, **characterised in that** the stop (14) is brought about with the aid of a window (16) arranged in a part (3b) which is integral with the lever (3).

5. Device according to any of claims 1 to 4, **characterised in that** the retractable finger (4) slides on the guiding piece (5) radially in relation to the steering column (2).

6. Device according to any of claims 1 to 5, **characterised in that** the lever (3) has, at its end (3a) which is situated in the vicinity of the steering column (2), an indexing finger (10) which is capable of moving along the longitudinal direction of the lever (3), counter to the returning force of a compression spring (11), and comes to bear on an indexing surface (12) which is integral with the fixed casing (1).

7. Device according to any of claims 1 to 6, **characterised in that** the casing (1) has an aperture (17) in the form of the arc of a circle in which there extends a low fixed wall (18) which is integral with the casing (1) and against which the springs (8) bear with one of their ends, their other ends bearing on the guiding piece (5).

8. Device according to claim 7, **characterised in that** the springs (8) are mounted in a prestressed manner in the guiding piece (5) and bear on the low fixed wall (18) after the guiding piece (5) has been placed in position on the casing (1).

9. Device according to any of claims 1 to 8, **characterised in that** the plane of pivoting of the guiding piece (5) is inclined in relation to a plane which is transverse and orthogonal in section to the steering column (2).

10. Device according to claim 9, **characterised in that** the guiding piece (5) has a sliding surface (19) which extends in a plane orthogonal to the axis of the steering column (2), thus enabling the retractable finger (4) to slide in this same plane.
